# EUROPÄISCHE PATENTANMELDUNG

(11) **EP 2 267 286 A1**
(43) Veröffentlichungstag der Anmeldung: **29.12.2010**
(21) Anmeldenummer: 10183987.6
(22) Anmeldetag: 31.08.2006
(51) Int. Cl.: F02B 39/14, F01M 1/14

(54) **Verfahren zum Betreiben einer Brennkraftmaschine**

(30) Priorität: 01.09.2005 AT 14322005
(62) Teilanmeldung aus: 06774757.6
(71) Anmelder: AVL List GmbH, 8020 Graz (AT)
(72) Erfinder: Ebner, Peter, 8042, GRAZ (AT)
(74) Vertreter: Babeluk, Michael

(57) **Zusammenfassung**

Die Erfindung betrifft ein Verfahren zum einer Brennkraftmaschine, insbesondere eines Hybridfahrzeuges, welche zumindest einen Abgasturbolader und zumindest eine Ölpumpe aufweist. Um eine ausreichende Schmierung des Turboladers beim Abstellvorgang zu ermöglichen, ist vorgesehen, dass bei einem auf eine Hochlast- oder Volllastphase der Brennkraftmaschine folgenden Abschaltbefehl die Ölpumpe eine Mindestnachlaufdauer lang betrieben wird.

## Beschreibung

Die Erfindung betrifft ein Verfahren zum Betreiben einer Brennkraftmaschine, insbesondere eines Hybridfahrzeuges, welche zumindest einen Abgasturbolader und zumindest eine Ölpumpe aufweist.

Insbesondere bei Hybridfahrzeugen mit einer Brennkraftmaschine mit Turbolader ist die Schmierung des Turboladers beim Abschaltvorgang der Brennkraftmaschine nach einer Betriebsphase mit hoher Drehzahl, beispielsweise im sogenannten Start-Stop-Betrieb, kritisch, da die, beispielsweise durch die Brennkraftmaschine angetriebene, Ölpumpe nach dem Abstellen kein Schmieröl mehr fördert, obwohl der Turbolader noch mit hoher Drehzahl laufen kann.

Aufgabe der Erfindung ist es, diese Nachteile zu vermeiden und eine ausreichende Schmierung des Turboladers beim Abstellvorgang zu ermöglichen.

Erfindungsgemäß wird dies dadurch erreicht, dass bei einem vorzugsweise auf eine Hochlast- oder Volllastphase der Brennkraftmaschine folgenden Abschaltbefehl die Ölpumpe eine Mindestnachlaufdauer lang weiter betrieben wird.

Insbesondere bei einer durch die Kurbelwellen in der Brennkraftmaschine angetriebene Ölpumpe ist es besonders vorteilhaft, wenn die Brennkraftmaschine für zumindest eine Mindestnachlaufdauer bei Teillast oder Leerlauf betrieben wird. Bei Verwendung einer elektrisch antreibbaren Ölpumpe dagegen kann vorgesehen sein, dass die Ölpumpe nach Abschalten der Brennkraftmaschine zumindest eine Mindestnachlaufdauer lang betrieben wird. Dadurch wird eine ausreichende Schmierung der Lager der Abgasturbine gewährleistet.

Um die Mindestnachlaufdauer möglichst kurz zu halten, ist es vorteilhaft, wenn die Mindestnachlaufdauer in Abhängigkeit zumindest eines Betriebsparameters, vorzugsweise der Drehzahl des Turboladers, des Drehmomentes oder der Einspritzmenge der Brennkraftmaschine, vorzugsweise zum Zeitpunkt des Abschaltbefehls, ermittelt wird.

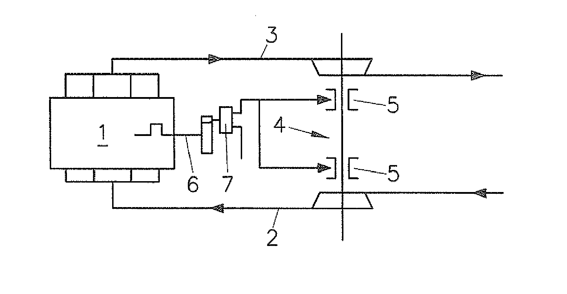

Die Erfindung wird im Folgenden anhand der Figur näher erläutert.

Die Fig. zeigt schematisch eine Brennkraftmaschine 1 für eine Hybridfahrzeug, mit einem Einlassstrang 2 und einem Auslassstrang 3. Im Einlass- und Auslassstrang 2, 3 ist ein Abgasturbolader 4 angeordnet, dessen Lager 5 durch eine von der Kurbelwelle 6 der Brennkraftmaschine 1 angetriebene Ölpumpe 7 mit Schmieröl versorgt werden. Insbesondere bei Hybridfahrzeugen treten Betriebsphasen auf, bei denen die Brennkraftmaschine 1 unmittelbar nach einem Volllastbetrieb abgeschaltet wird. Da die Ölpumpe 7 normalerweise mit den anderen Nebenantrieben über die Kurbelwelle 6 betrieben wird, liefert sie nach dem Abstellen der Brennkraftmaschine kein Schmieröl mehr zu den Lagern 5 des Abgasturboladers 4, obwohl der Abgasturbolader 4 noch mit sehr hoher Drehzahl umlaufen kann. Dadurch kann es zu einem Schmierölmangel der Lager 5 des Abgasturboladers 4 und zu dessen Zerstörung kommen.

Um dies zu vermeiden, wird aufgrund des Profils leistungsspezifischer Motorparameter (Moment, Einspritzmenge), des Drehzahlprofils der Brennkraftmaschine 1 und/oder der Drehzahl des Abgasturboladers 4 eine Mindestnachlaufdauer ermittelt, ab der eine zerstörungsfreie Abschaltung möglich ist. Der Verlauf der spezifischen Größen wird in einem Zeitfenster betrachtet und daraus die Nachlaufdauer Δt bzw. der frühestmögliche Abschaltzeitpunkt ermittelt. Nachdem an die Brennkraftmaschine 1 der Befehl zum Abschalten gegeben wird, läuft diese noch für eine vordefinierte Nachlaufzeitdauer Δt lang nach, um über die Ölpumpe 7 die Lager 5 des Abgasturboladers 4 ausreichend mit Schmieröl zu versorgen.

## Patentansprüche

1. Verfahren zum Betreiben einer Brennkraftmaschine, insbesondere eines Hybridfahrzeuges, welche zumindest einen Abgasturbolader und zumindest eine Ölpumpe aufweist, **dadurch gekennzeichnet, dass** bei einem auf eine Hochlast- oder Volllastphase der Brennkraftmaschine folgenden Abschaltbefehl die Ölpumpe eine Mindestnachlaufdauer lang betrieben wird.

2. Verfahren nach Anspruch 1, wobei die Ölpumpe durch die Brennkraftmaschine angetrieben wird, **dadurch gekennzeichnet, dass** die die Ölpumpe antreibende Brennkraftmaschine bei einem auf eine Hochlast- oder Volllastphase folgenden Abschaltbefehl zumindest eine Mindestnachlaufdauer lang, vorzugsweise bei Teillast oder Leerlauf, betrieben wird.

3. Verfahren nach Anspruch 1, insbesondere mit einer elektrisch antreibbaren Ölpumpe, **dadurch gekennzeichnet, dass** die Ölpumpe nach Abschalten der Brennkraftmaschine zumindest eine Mindestnachlaufdauer lang betrieben wird.

4. Verfahren nach einem der Ansprüche 1 bis 3, **dadurch gekennzeichnet, dass** die Mindestnachlaufdauer in Abhängigkeit zumindest eines Betriebsparameters, vorzugsweise der Drehzahl des Turboladers, des Drehmomentes oder der Einspritzmenge der Brennkraftmaschine, vorzugsweise zum Zeitpunkt des Abschaltbefehls, ermittelt wird.

5. Verfahren nach einem der Ansprüche 1 bis 4, **dadurch gekennzeichnet, dass** die Mindestnachlaufdauer vordefiniert wird.
